# EUROPÄISCHE PATENTSCHRIFT

(11) **EP 1 804 098 B1**
(45) Veröffentlichungstag und Bekanntmachung des Hinweises auf die Patenterteilung: **17.02.2010**
(21) Anmeldenummer: 06127329.8
(22) Anmeldetag: 29.12.2006
(51) Int. Cl.: G02B 7/02, G03B 17/14

(54) **Befestigungsvorrichtung sowie Modul umfassend ein Objektiv einer Kamera sowie einen Linsenhalter mit Spannring**
Mounting device and module comprising a lens assembly of a camera and a lens mount with a clamp ring
Dispositif de maintien et module comprenant une objectif d'une caméra et une monture d'objectif avec un anneau de serrage

(30) Priorität: 03.01.2006 DE 102006000641
(43) Veröffentlichungstag der Anmeldung: 04.07.2007
(73) Patentinhaber: ROBERT BOSCH GMBH, 70442 Stuttgart (DE)
(72) Erfinder: Gottwald, Frank, 71287, Weissach (DE)

(56) Entgegenhaltungen:
- WO-A-99/27318
- DE-A1- 10 315 123
- DE-U1- 8 301 479
- US-A- 6 061 191

## Beschreibung

### Stand der Technik

Die Erfindung geht aus von einer Befestigungsvorrichtung sowie einem Modul umfassend ein Objektiv einer Kamera sowie einen Linsenhalter nach den Oberbegriffen der unabhängigen Ansprüche.

Nach dem Stand der Technik werden Objektive von Kameraaufbauten üblicherweise mittels Klebstoffen oder Madenschrauben in einem Linsenhalter fixiert. Madenschrauben zeichnen sich dadurch aus, dass sie keinen Schraubenkopf aufweisen. Beim Verbindungsvorgang bohrt eine Madenschraube einen Tubus des Objektivs von der Seite her an und hinterlässt im Tubus einen Abdruck in der Form eines Eindrucks. Das Objektiv wird dann in den Linsenhalter schraubend fokussiert und anschließend mit den angesprochenen Mitteln fixiert. Der Einsatz von Klebstoffen hat den Nachteil, dass überschüssiger Klebstoff wieder entfernt werden muss. Dies erhöht einerseits die Fertigungskosten. Andererseits kann die Fokussierung erst nach dem Aushärten des Klebers überprüft werden. Unfokussierte Teile werden dadurch wertlos und müssen wieder verschrottet werden, da normalerweise die Verklebung nicht zerstörungsfrei gelöst werden kann. Außerdem kann der Klebstoff bis zu seiner Aushärtung nicht Toleranzen ausgleichen, die im Gewinde auftreten können. Dadurch kann es zu einer nachteiligen Defokussierung während des Aushärtevorgangs kommen. Dieses Problem tritt vor allem bei sehr lichtstarken Objektiven, beispielsweise im automobilen Einsatzbereich, auf. Hier wird ein Objektiv mit einer großen Blendenöffnung eingesetzt, was sich in einem sehr kleinen Tiefenschärfenbereich bemerkbar macht. Ein geeigneter Klebstoff kann zur Abdichtung des optischen Aufbaus von Objektiv und Linsenhalter beitragen.

Nachteilig ist außerdem, dass beim Bohrvorgang der Madenschraube in den Tubus des Objektivs die sehr empfindlichen optischen Systeme durch Verkippen defokussiert werden können. Zur Vermeidung dieses Problems ist es bekannt, mehrere Madenschrauben zu verwenden, wodurch eine verkippungsfreie Montage bzw. Fixierung erzielbar ist. Allerdings ist diese Methode relativ komplex und aufwendig. Zudem hinterlassen die Madenschrauben den beschriebenen Abdruck im Tubus. Grundsätzlich wäre bei der vorgeschlagenen Methode ein leichtes nachträgliches Fokussieren möglich, jedoch erschwert das Loch eine neue Fixierung. Es besteht dabei die Gefahr, dass sich die Optik nachträglich im Linsenhaltergewinde verdreht, so dass eine wiederholte Nutzung des bereits gebohrten Lochs kritisch ist. Eine Abdichtung der Optik könnte mit einem Dichtungsring oder einem Klebstoff erfolgen, was jedoch relativ umständlich ist.

### Offenbarung der Erfindung

Bei der erfindungsgemäßen Befestigungsvorrichtung zur Fixierung eines Objektivs einer Kamera in einem Linsenhalter ist das Objektiv mittels eines Spannrings mit dem Linsenhalter lösbar verbunden. Ein erfindungsgemäßes Modul umfasst ein Objektiv einer Kamera sowie einen Linsenhalter, wobei das Objektiv mittels eines Spannrings mit dem Linsenhalter lösbar verbunden ist. Dabei ist in einem Kontaktbereich zwischen dem Spannring und dem Objektiv und in einem Kontaktbereich zwischen dem Spannring und dem Linsen halter eine Dichtung vorgesehen.

Besonders vorteilhaft dabei ist jeweils, dass das Objektiv relativ einfach auf dem Linsenhalter fixierbar ist. Diese Fixierung ist günstigerweise auch nachträglich wieder lösbar, so dass die Optik bedarfsweise jederzeit wieder gelöst werden kann, um beispielsweise neu fokussiert zu werden. Außerdem ist die Fixierung vorteilhafterweise zerstörungsfrei lösbar, so dass eine unnütze Verschrottung wertvoller Bauteile vermieden werden kann. Dadurch kann eine Nacharbeit, Reparatur oder Wiederverwertung von hochwertigen optischen Bauelementen wie beispielsweise Optik, Linsenhalter und Klemmvorrichtung sichergestellt werden, was positive Auswirkungen auf die Produktionskosten hat. Bei unbrauchbarem Linsenhalter kann das hochwertige Objektiv ohne äußere Merkmale bzw. Beschädigungen wieder neu verwendet werden.

In einer bevorzugten Weiterentwicklung der Erfindung ist der Spannring gleichmäßig über einen Außenumfang des Linsenhalters spannbar. Dadurch übt der Spannring zweckmäßigerweise einen umlaufend gleichen Druck auf das Objektiv aus, wobei das Objektiv verdrehsicher im Linsenhalter eingespannt werden kann.

Ist am Außenumfang eine Aufnahme für den Spannring vorgesehen, kann dieser bei der Montage nicht verrutschen, wodurch auf einfache Art und Weise eine besonders stabile Befestigungsvorrichtung bereitgestellt und die Montage erleichtert wird.

Besonders bevorzugt ist der Linsenhalter geschlitzt ausgebildet, wobei die Schlitze parallel zu einer optischen Achse verlaufen. Die Schlitze sind bevorzugt in einem Bereich des Linsenhalters angeordnet, der im befestigten Zustand von dem Spannring umgeben ist. Ähnlich wie bei der konventionellen Sicherung von Gartenschläuchen auf Endstücken kann durch die Schlitze eine einfache und sichere Montage des Objektivs auf dem Linsenhalter erzielt werden. Durch die Schlitze wird eine gute Fixierbarkeit hergestellt, wobei ein Verrutschen der Bauteile vermieden wird und die Verbindung mit einer hohen Präzision realisiert werden kann. Dies ist insbesondere im Hinblick auf die empfindliche Optik von Vorteil.

Bevorzugt ist die Dichtung als Manschette ausgebildet, die beim Zusammenziehen des Spannrings radial angedrückt wird. Dadurch wird eine bevorzugte Abdichtung der Verbindung zwischen Linsenhalter und Objektiv hergestellt.

Insgesamt wird mit der Erfindung eine einfache und stabile Möglichkeit zur Fixierung eines Objektivs in einem Linsenhalter bereitgestellt, die sich insbesondere zum Einsatz im automobilen Bereich eignet. Es können jedoch durchaus auch andere Verwendungsmöglichkeiten realisiert werden.

### Zeichnungen

Weitere Ausführungsformen, Aspekte und Vorteile der Erfindung, die durch die Ansprüche definiert ist, ergeben sich aus nachfolgend anhand von Zeichnungen dargestellten Ausführungsbeispielen der Erfindung.

Im Folgenden zeigen:
- Fig.1: eine erste Ansicht eines bevorzugten Ausführungsbeispiels einer erfindungsgemäßen Befestigungsvorrichtung im Schnitt; und
- Fig. 2: eine zweite Ansicht des Ausführungsbeispiels nach Fig. 1.

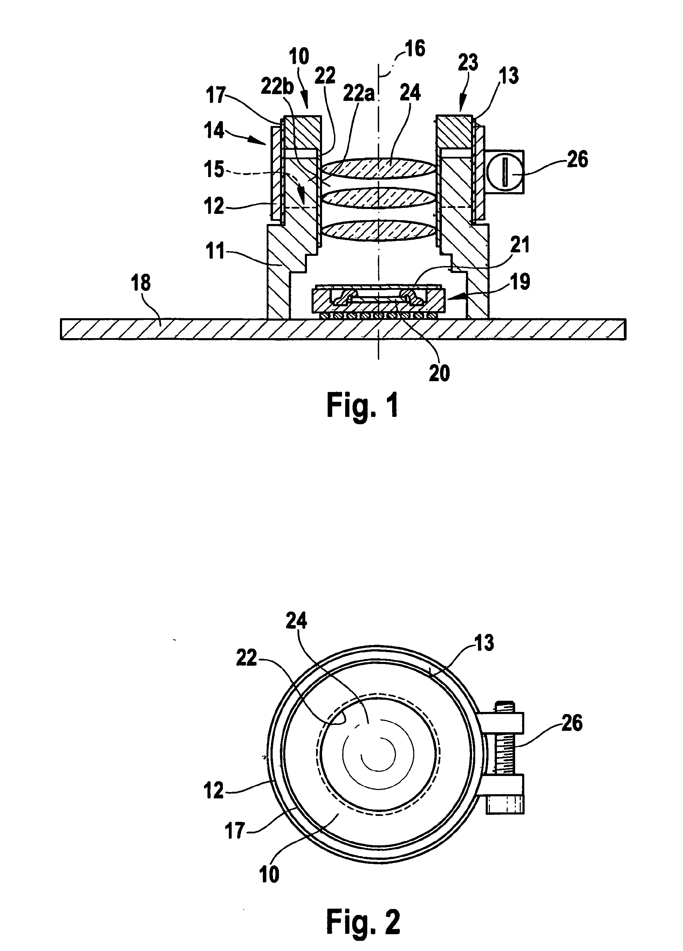

Fig. 1 zeigt als erste Ansicht des bevorzugten Ausführungsbeispiels einer erfindungsgemäßen Befestigungsvorrichtung eine Kameraanordnung im Schnitt entlang einer optischen Achse 16, die im Wesentlichen durch eine Symmetrieachse der Optik festgelegt wird. Die Befestigungsvorrichtung umfasst ein Objektiv 10 sowie einen Linsenhalter 11. Ferner ist eine Bildsensoreinheit vorgesehen mit einer Leiterplatte 18 und einem Imager (Bildsensor) 19. Der Imager 19 umfasst wiederum ein Imagerchip 20, z.B. mit lichtempfindlichem Silizium, und eine lichtdurchlässige Schutzabdeckung 21. Auf der Leiterplatte 18 befinden sich die funktionsfähige Elektronik und ein Anschluss zur Übertragung von Daten, beispielsweise Bilddaten, und von Energie zum Betreiben der elektronischen Bauteile der Anordnung.

Das Objektiv 10 ist im Wesentlichen zylinderförmig mit einem nach außen ragenden umlaufenden Rand 23. Der Zylinderinnenrand 22a dient zur Aufnahme von Linsen 24. Am Zylinderaußenrand 22b liegt im montierten Zustand der Linsenhalter 11 an, wobei das Objektiv 10 mittels eines Spannrings 12 mit dem Linsenhalter 11 lösbar verbunden ist. Der Spannring 12 wird mittels einer Schraube 26 gespannt bzw. wieder gelöst. Der Spannring 12 ist im montierten Zustand gleichmäßig über einen Außenumfang 13 des Objektivs 10 spannbar. Zur leichteren Justierung des Spannrings 12 ist am Außenumfang 13 des Objektivs 10 eine Aufnahme 14 für den Spannring 12 in Form einer leichten, in der Figur nicht erkennbaren Vertiefung vorgesehen. In einem Kontaktbereich zwischen dem Spannring 12 und dem Objektiv 10 ist eine Dichtung 17 in Form einer Manschette vorgesehen.

Der Linsenhalter 11 ist geschlitzt ausgebildet, wobei die in der Figur nicht erkennbaren Schlitze 15 parallel zur optischen Achse 16 verlaufen. Die Schlitze 15 sind in einem Bereich des Linsenhalters 11 angeordnet, der im befestigten Zustand von dem Spannring 12 umgeben ist. Mit einer strichlierten Linie ist angedeutet, wo die Schlitze 15 enden.

In Fig. 2 ist schematisch eine zweite Ansicht des bevorzugten Ausführungsbeispiels gemäß Fig. 1 im Querschnitt dargestellt, wobei die optische Achse 16 senkrecht zur Bildfläche verläuft. Gleiche Elemente werden in den Fig. 1 und 2 gleich bezeichnet.

Die Linsen 24 sind durch eine geeignete Halterung an einem inneren Umfang 22 des Objektivs 10 mit diesem verbunden. Am Außenumfang 13 des Objektivs, ist ein Spannring 12 angeordnet, wobei zwischen dem Spannring 12 und dem Objektiv 10 eine Dichtung 17 in Form einer Manschette vorgesehen ist. Der Spannring 12 wird mittels einer Schraube 26 durch Drehen zusammengezogen und übt dann einen umlaufend gleichen Druck auf das Objektiv 10 aus.

## Patentansprüche

1. Modul umfassend ein Objektiv (10) einer Kamera sowie einen Linsenhalter (11) und einen Spannring (12), wobei das Objektiv (10) mittels des Spannrings (12) mit dem Linsenhalter (11) lösbar verbunden ist, **dadurch gekennzeichnet, dass** in einem Kontaktbereich zwischen dem Spannring (12) und dem Objektiv (10) und in einem Kontaktbereich zwischen dem Spannring (12) und dem Linsenhalter (11) eine Dichtung (17) vorgesehen ist.

2. Modul nach Anspruch 1, **dadurch gekennzeichnet, dass** der Spannring (12) gleichmäßig über einen Außenumfang (13) des Objektivs (10) spannbar ist.

3. Modul nach Anspruch 2, **dadurch gekennzeichnet, dass** am Außenumfang (13) eine Aufnahme (14) für den Spannring (12) vorgesehen ist.

4. Modul nach einem der vorhergehenden Ansprüche, **dadurch gekennzeichnet, dass** der Linsenhalter (11) geschlitzt ausgebildet, ist, wobei die Schlitze (15) parallel zu einer optischen Achse (16) verlaufen.

5. Modul nach Anspruch 4, **dadurch gekennzeichnet, dass** die Schlitze (15) in einem Bereich des Linsenhalters (11) angeordnet sind, der im befestigten Zustand von dem Spannring (12) umgeben ist.

6. Modul nach Anspruch 1, **dadurch gekennzeichnet, dass** die Dichtung (17) als Manschette ausgebildet ist.

## Claims

1. Module comprising an objective (10) of a camera as well as a lens mount (11) and a clamp ring (12), the objective (10) being detachably connected to the lens mount (11) by means of the clamp ring (12), **characterized in that** a seal (17) is provided in a contact region between the clamp ring (12) and the objective (10), and in a contact region between the clamp ring (12) and the lens mount (11).

2. Module according to Claim 1, **characterized in that** the clamp ring (12) can be clamped uniformly over an outer circumference (13) of the objective (10).

3. Module according to Claim 2, **characterized in that** a holder (14) for the clamp ring (12) is provided on the outer circumference (13).

4. Module according to one of the preceding claims, **characterized in that** the lens mount (11) is of slotted design, the slots (15) running parallel to an optical axis (16).

5. Module according to Claim 4, **characterized in that** the slots (15) are arranged in a region of the lens mount (11) that is surrounded by the clamp ring (12) in the fastened state.

6. Module according to Claim 1, **characterized in that** the seal (17) is designed as a sleeve.

## Revendications

1. Module comprenant un objectif (10) d'une caméra ainsi qu'un porte-lentille (11) et qu'une bague de serrage (12), l'objectif (10) pouvant être relié de manière libérable au porte-lentille (11) au moyen de la bague de serrage (12),
**caractérisé en ce que**
un joint d'étanchéité (17) est prévu dans une zone de contact entre la bague de serrage (12) et l'objectif (10) et dans une zone de contact entre la bague de serrage (12) et le porte-lentille (11).

2. Module selon la revendication 1, **caractérisé en ce que** la bague de serrage (12) peut être serrée uniformément sur la périphérie extérieure (13) de l'objectif (10).

3. Module selon la revendication 2, **caractérisé en ce qu'**un logement (14) pour la bague de serrage (12) est prévu à la périphérie extérieure (13).

4. Module selon l'une des revendications précédentes, **caractérisé en ce que** le porte-lentille (11) est fendu, les fentes (15) s'étendant parallèlement à un axe optique (16).

5. Module selon la revendication 4, **caractérisé en ce que** les fentes (15) sont disposées dans une partie du porte-lentille (11) entourée par la bague de serrage (12) à l'état fixé.

6. Module selon la revendication 1, **caractérisé en ce que** le joint d'étanchéité (17) est configuré en manchette.
